# EUROPEAN PATENT SPECIFICATION

(11) **EP 4 050 985 B1**
(45) Date of publication and mention of the grant of the patent: **14.05.2025**
(21) Application number: 20811440.5
(22) Date of filing: 29.10.2020
(51) Int. Cl.: A01D 45/00

(54) **PICK-UP HEAD FOR MACHINES FOR PICKING UP CROPS IN A FIELD**
AUFNAHMEKOPF FÜR MASCHINEN ZUM AUFNEHMEN VON ERNTEGUT AUF EINEM FELD
TÊTE DE RAMASSAGE POUR MACHINES DE RAMASSAGE DE CULTURES DANS UN CHAMP

(30) Priority: 31.10.2019 IT 201900020116
(43) Date of publication of application: 07.09.2022
(73) Proprietor: NARDI SRL, 37040 Veronella (VR) (IT)
(72) Inventor: NARDI, Alessandro, 36045 LONIGO (IT)
(74) Representative: Modiano, Micaela Nadia
(86) International application number: PCT/IB2020/060154
(87) International publication number: WO 2021/084466

(56) References cited:
- EP-A1- 1 543 716
- EP-A1- 3 461 315
- WO-A1-2016/109714
- CN-A- 109 699 290
- DE-U1- 8 600 471

## Description

The present invention relates to a pick-up head for machines for picking up crops in a field.

As is known, machines for picking up crops in a field, such as combine harvesters or the like, have in their front part, with respect to their advancement direction on the field, a pick-up head which extends transversely to the advancement direction of the machine and allows to pick up from the field crops grown in rows arranged at a specific distance from each other. DE8600471 discloses such a pick-up head for a harvester.

The pick-up head has, along its extension, a plurality of pick-up units arranged mutually side by side, each of which has a respective longitudinal passage, which is designed to be crossed by the crops to be picked up of a corresponding row and along which crop cutting means are interposed.

In particular, the longitudinal passage of each pick-up unit is delimited by a pair of mutually opposite traction elements which allow to push the crops that enter the passage, during the advancement of the machine, so as to convey them toward a conveyance screw feeder which extends along the extension of the pick-up head.

Typically, said traction elements are constituted by two closed-loop chains, optionally provided with teeth arranged in mutually offset positions, which unwind continuously between a pair of pulleys, which delimit, for each chain, a respective active portion which is extended along a corresponding longitudinal edge of the passage.

Above the pick-up units, the head has pick-up container bodies, shaped like substantially a "pan" or "tray", each of which forms a respective receptacle, which is open upward; said bodies are separated from each other by longitudinal slots, each arranged above the longitudinal passage of a respective pick-up unit.

Said pick-up container bodies have the function of receiving, in the corresponding receptacle, seeds, leaves or other parts of the crop which one wishes to pick up and which fall from said crops, during their entrainment by the traction elements of the pick-up units toward the conveyance screw feeder.

Since the crops during their harvest are very dry, the quantity of parts of the crop to be picked up that thus fall from the crop is significant, and a not-negligible portion of this quantity falls inside the longitudinal slots between the pick-up container bodies, ending up being scattered on the ground, with considerable production loss.

The aim of the present invention is to provide a pick-up head for machines for picking up crops in a field that is capable of improving the known background art in one or more of the above mentioned aspects.

Within the scope of this aim, an object of the invention is to provide a pick-up head that allows to avoid, or at least to reduce considerably, the risk of scattering on the ground of parts of the crop to be picked up.

Another object of the invention is to provide a pick-up head for machines for picking up crops in a field that is easy and practical to provide.

Another object of the present invention is to provide a pick-up head for machines for picking up crops in a field that is reliable and safe in use.

Furthermore, another object of the present invention is to overcome the drawbacks of the background art in a manner that is alternative to any existing solutions.

Another object of the invention is to provide a pick-up head for machines for picking up crops in a field which can be competitive also from an economic standpoint.

This aim and these and other objects that will become better apparent hereinafter are achieved by a pick-up head for machines for picking up crops in a field according to claim 1, optionally provided with one or more of the characteristics of the dependent claims.

Further characteristics and advantages of the invention will become better apparent from the description of preferred but not exclusive embodiments, of the pick-up head for machines for picking up crops in a field according to the invention, illustrated by way of non-limiting example in the accompanying drawings, wherein:

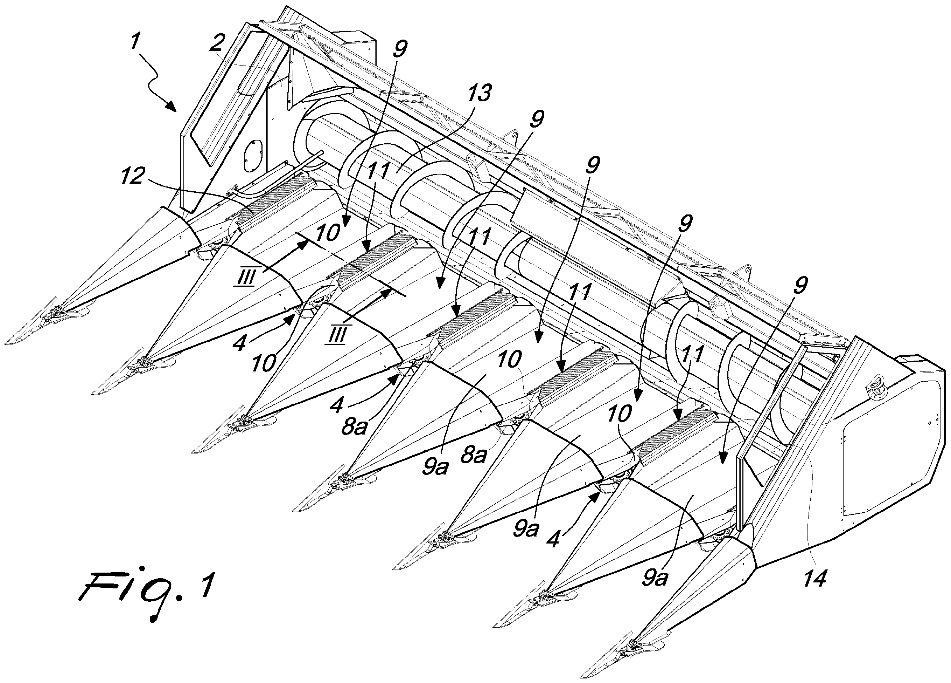

Figure 1 is a perspective view of the pick-up head according to the invention;

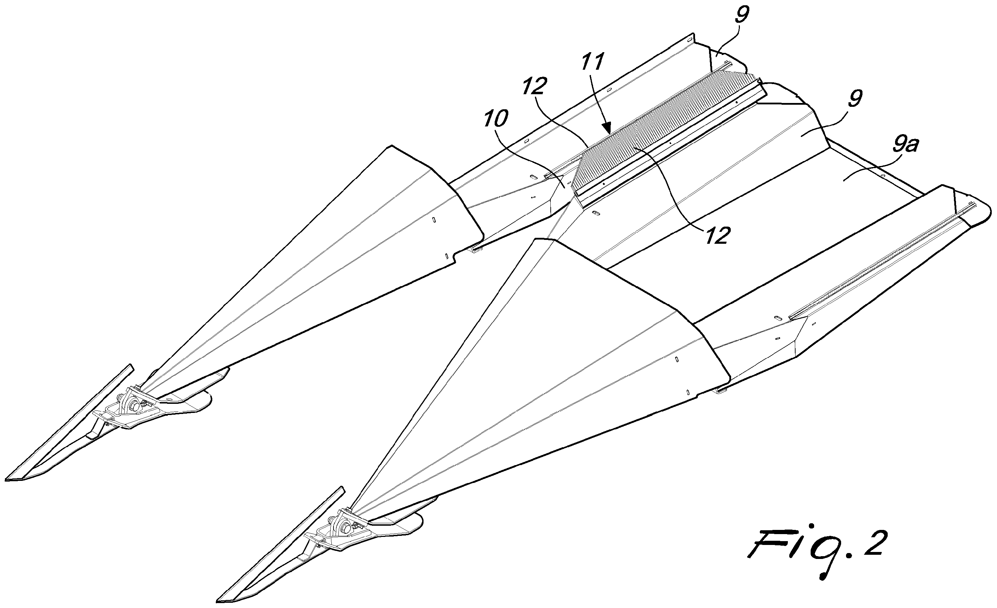

Figure 2 is an enlarged-scale view of a detail of the head in Figure 1;
Figure 3 is a sectional view taken along the plane III-III of Figure 1;

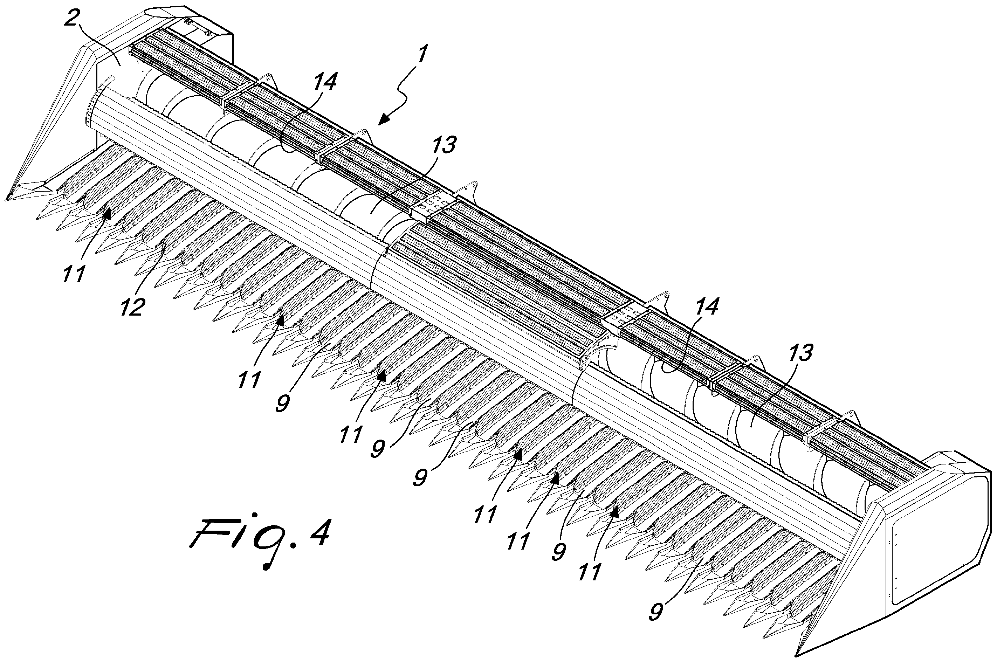

Figure 4 is a perspective view of another embodiment of the head according to the invention;

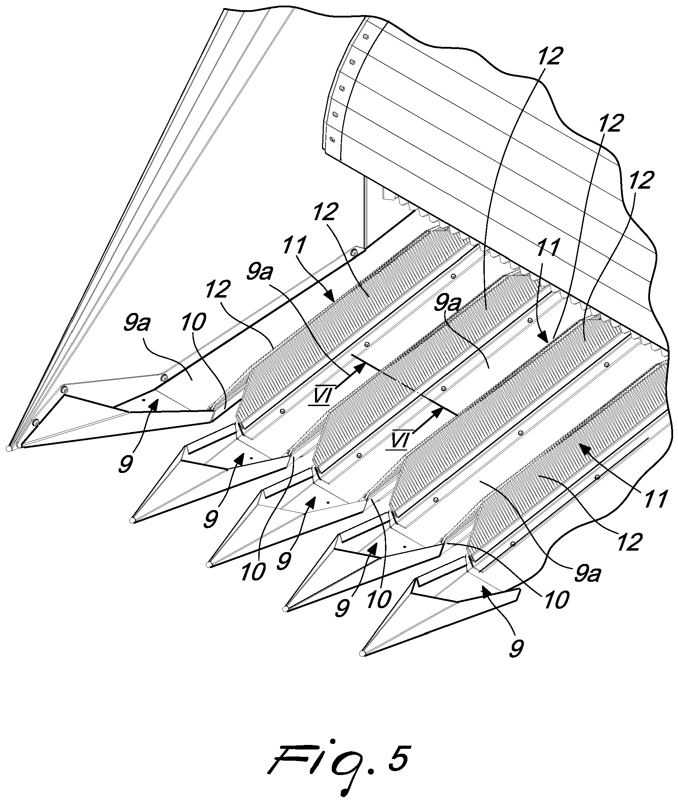

Figure 5 is an enlarged-scale view of a detail of Figure 4;
Figure 6 is a sectional view, taken along the plane VI-VI of Figure 5;

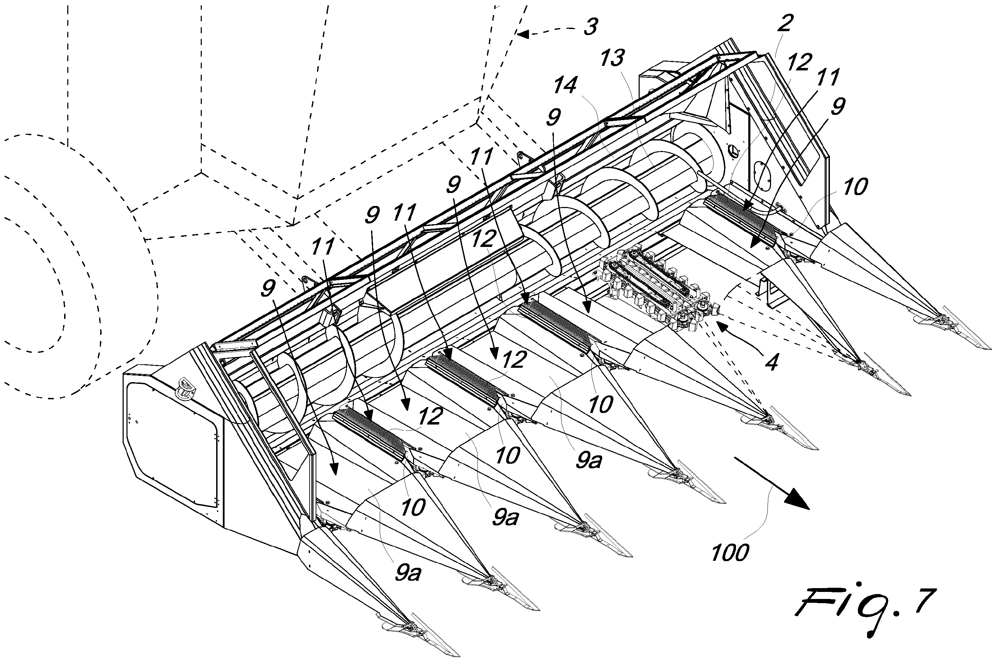

Figure 7 is a perspective view of the head according to the invention in the embodiment of Figure 1, applied to a machine for picking up crops, with parts shown in phantom lines and others removed for the sake of convenience;

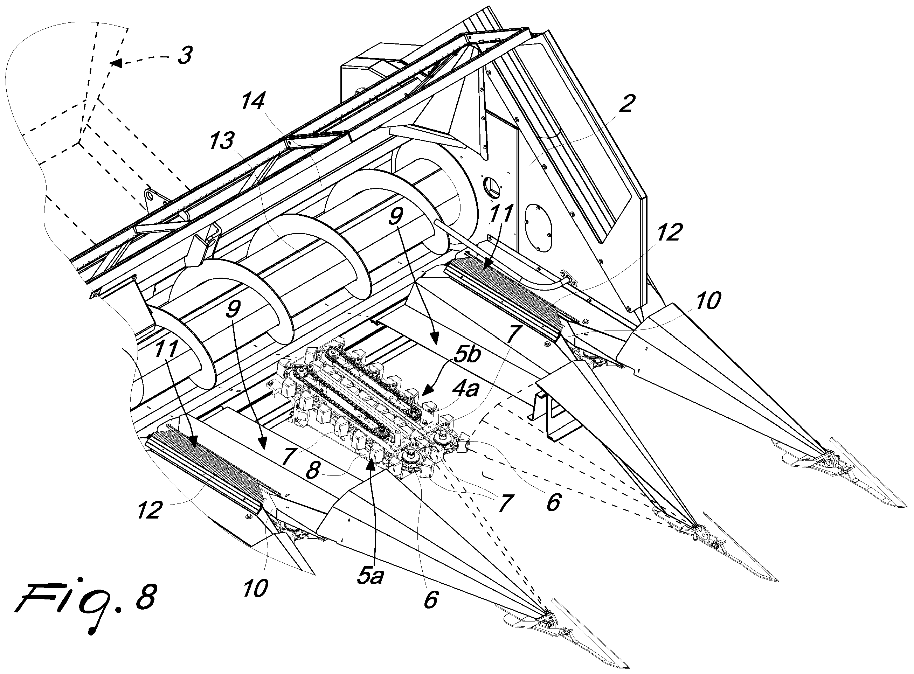

Figure 8 is an enlarged-scale view of a detail of Figure 7.

With reference to the cited figures, the pick-up head for machines for picking up crops in a field, according to the invention, generally designated by the reference numeral 1, comprises a structure 2 adapted to be connected in a per se known manner, to the front part of a machine 3 for picking up crops, which can move on the ground along an advancement direction 100.

In particular, the structure extends substantially transversely to the advancement direction 100 of the machine 3 and supports a plurality of pick-up units 4 arranged mutually side by side.

Each pick-up unit 4 has a respective longitudinal passage 4a which is designed to be crossed axially by the crops to be picked up and is delimited longitudinally by a pair of mutually opposite traction elements 5a, 5b, which have the function of pushing the crops along the longitudinal passage 4a.

As usual, said traction elements 5a and 5b are provided by respective closed-loop chains 6, optionally provided with teeth 7, which are extended between a respective pair of pulleys 8a and 8b.

Along the longitudinal passage 4a of each pick-up unit 4 it is possible to provide crop cutting means, constituted for example by rotating disc-like blades 8.

A plurality of mutually laterally adjacent pick-up container bodies 9 is arranged above the pick-up units 4 and each forms a respective receptacle 9a, which is open upward and is designed to receive parts to be picked up of the crops, such as seeds, leaves or others, which detach by falling from the crops during their entrainment along the passage 4a of the pick-up units 4.

More particularly, the pick-up container bodies 9 are separated from each other by longitudinal slots 10, each arranged above the longitudinal passage 4a of a respective pick-up unit 4, and which are designed to be crossed along their longitudinally extension by the crops entrained by the traction elements 5a and 5b.

The particularity of the invention resides in that it comprises means 11 for the at least partial closure of at least one of the longitudinal slots 10.

More particularly, the closure means 11 are extended along at least one longitudinal edge of the corresponding longitudinal slot 10 and are elastically flexible in order to allow their elastic deformation upon the passage of the crops along the longitudinal extension of the corresponding longitudinal slot 10.

More preferably, there are at least partial closure means 11 for each one of the longitudinal slots 10.

In practice, the closure means 11 allow to prevent the possibility of crossing the corresponding longitudinal slot 10 in a direction that is substantially perpendicular to the plane of arrangement of said longitudinal slot, allowing in any case the possibility of the crossing in a longitudinal direction of the corresponding longitudinal slot 10 by the crops entrained by the traction elements 5a and 5b.

In this manner, the closure means 11 allow to avoid or at least limit the possibility that seeds or other crop parts that might be released by the crops that cross longitudinally the longitudinal slots 10 might fall through the longitudinal slots 10 without being picked up by the pick-up container bodies 9.

As shown, the closure means 11 can conveniently comprise, for each longitudinal slot 10, at least one brush 12 that is extended along at least one portion of a longitudinal edge of the respective longitudinal slot 10.

In particular, the bristles of the brush 12 are elastically flexible and extend from the corresponding longitudinal edge of the respective longitudinal slot 10 toward the axis of the respective longitudinal slot 10.

More preferably, there are closure means 11 which extend along each one of the longitudinal edges of the longitudinal slots 10.

In this case, the closure means 11 can advantageously comprise, for each longitudinal slot 10, at least one pair of brushes 12, each arranged along a respective longitudinal edge of the corresponding longitudinal slot 10, with the bristles of each one of the brushes 12 extending from the respective longitudinal edge toward the axis of the corresponding longitudinal slot 10.

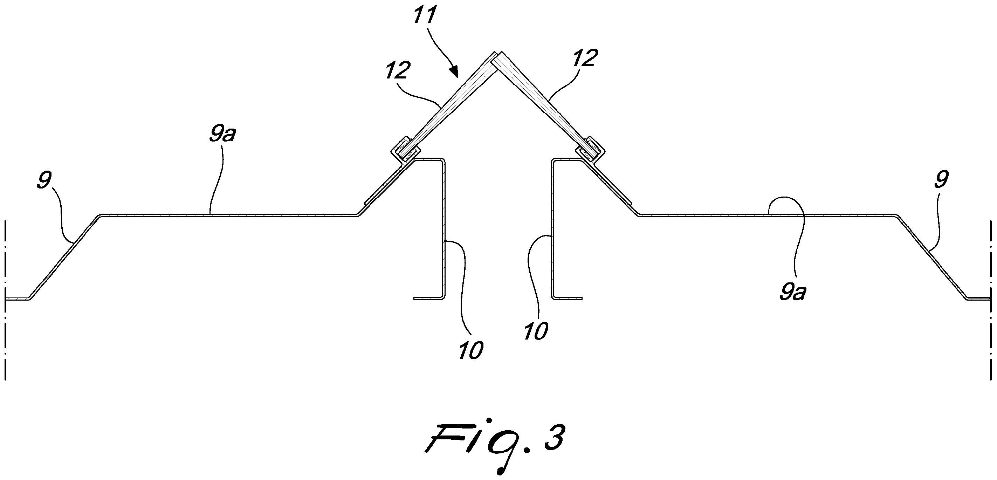

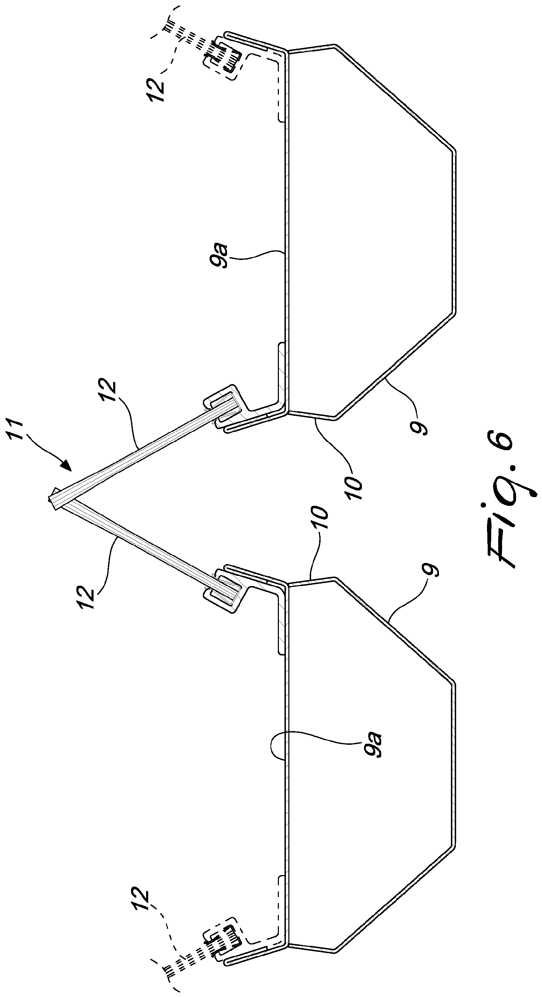

Conveniently, as can be seen particularly in Figures 3 and 6, the brushes 12 have, in a transverse cross-section, the respective bristles arranged inclined downward, proceeding from the axis of the corresponding longitudinal slot 10 toward the corresponding longitudinal edge of the corresponding longitudinal slot, with respect to the plane of arrangement of the corresponding longitudinal slot 10, so that the parts of the crop to be picked up, such as for example seeds, leaves or others, that are released by the crops that cross the longitudinal slots 10 and fall at the longitudinal slots 10 can slide on the bristles of the brushes 12 in the direction of the pick-up container bodies 9.

For the sake of completeness, it should be said that conveniently the structure 2 supports, furthermore, a screw feeder 13 which is accommodated in a channel 14 for the conveyance of the crops picked up by the pick-up units 4, which extends along a direction that is substantially perpendicular to the advancement direction 100 of the machine 3 and is arranged downstream of the pick-up units 4 along the direction of entrainment of the crops imparted by the traction elements 5a and 5b.

The operation of the pick-up head according to the invention is as follows.

During the advancement of the machine 3 on the field, the crops of a specific row enter the longitudinal passage 4a of a respective pick-up unit 4, being entrained along the longitudinal passage 4 by the traction elements 5a, 5b toward the conveyance channel 14 and thus crossing longitudinally a corresponding longitudinal slot 10.

As the crops pass along the longitudinal extension of the longitudinal slot 10, the bristles of the brushes 12 are subjected to an elastic deformation, which allows the crops to advance along the longitudinal slot 10 while keeping the longitudinal slot 10 practically closed.

Any crop parts to be picked up that should fall, above the longitudinal slot 10, from the crops that cross said longitudinal slot longitudinally are affected by the brushes 12 and, by virtue of the inclination of the bristles of the brushes 12, slide along the bristles of said brushes in the direction of the pick-up container bodies 9 until they thus reach the corresponding receptacles 9a, without being scattered on the ground.

In practice it has been found that the invention achieves the intended aim and objects and in particular the fact is stressed that the pick-up head according to the invention allows effectively avoid or, at least, limit the failed pick-up of seeds, leaves or other parts of the crop to be picked up, thanks to the closure means at the longitudinal slots between the pick-up container bodies.

The invention thus conceived is susceptible of numerous modifications and variations, all of which are within the scope of the accompanying claims; all the details may furthermore be replaced with other technically equivalent elements.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A pick-up head for machines for picking up crops in a field, comprising a structure (2) adapted to be connected to the front part of a machine (3) for picking up crops, which can move on the ground along an advancement direction (100), and extends substantially transversely to said advancement direction (100), said structure (2) supporting a plurality of pick-up units (4) arranged mutually side by side and each provided with a respective longitudinal passage (4a) designed to be crossed axially by the crops to be picked up and delimited longitudinally by a pair of traction elements (5a, 5b), which are mutually opposite and are adapted to push the crops along said longitudinal passage (4a), above said pick-up units (4) there being a plurality of pick-up container bodies (9), each of which forms a respective receptacle (9a), which is open upward, said bodies being separated from each other by longitudinal slots (10), each arranged above the longitudinal passage (4a) of a respective pick-up unit (4), and designed to be crossed longitudinally by the crops entrained by said traction elements (5a, 5b), wherein the pick-up head comprises means (11) for the at least partial closure of at least one of said longitudinal slots (10), said closure means (11) extending along at least one longitudinal edge of said at least one longitudinal slot (10) and being elastically flexible in order to allow their elastic deformation upon the passage of the crops along the extension of said at least one longitudinal slot (10) **characterized in that** said closure means (11) comprise at least one brush (12) that extends along at least one portion of said one at least one longitudinal edge, the bristles of said at least one brush (12) extending from said at least one longitudinal edge toward the axis of said at least one longitudinal slot (10).

2. The pick-up head according to claim 1, **characterized in that** said closure means (11) are extended along each one of the longitudinal edges of said at least one longitudinal slot (10).

3. The pick-up head according to one or more of the preceding claims, **characterized in that** said closure means (11) comprise at least one pair of brushes (12), each arranged along a respective longitudinal edge of said at least one longitudinal slot (10), the bristles of each one of said brushes extending from the corresponding longitudinal edge of said at least one slot toward the axis of said at least one longitudinal slot (10).

4. The pick-up head according to one or more of the preceding claims, **characterized in that** said brushes (12) have, in transverse cross-section, the respective bristles arranged inclined downward, proceeding from the axis of said at least one longitudinal slot (10) toward the corresponding longitudinal edge of said at least one longitudinal slot (10), with respect to the plane of arrangement of said at least one longitudinal slot (10).

## Patentansprüche

1. Ein Aufnahmekopf für Maschinen zum Aufnehmen von Erntegut auf einem Feld, der eine Struktur (2) umfasst, ausgebildet, um am vorderen Teil einer Maschine (3) zum Aufnehmen von Erntegut angeschlossen zu werden, die sich auf dem Boden in einer Vorschubrichtung (100) bewegen kann und sich im Wesentlichen quer zu der Vorschubrichtung (100) erstreckt; wobei die Struktur (2) eine Vielzahl von Aufnahmeeinheiten (4) trägt, die nebeneinander angeordnet und jeweils mit einem entsprechenden Längsdurchlass (4a) versehen sind, der dazu bestimmt ist, axial von dem aufzunehmenden Erntegut durchquert zu werden, und in Längsrichtung durch ein Paar von Zugelementen (5a, 5b) begrenzt ist, die einander gegenüberliegen und ausgebildet sind, um das Erntegut den Längsdurchlass (4a) entlangzuschieben; wobei sich über den Aufnahmeeinheiten (4) eine Vielzahl von Aufnahme-Behälterkörpern (9) befindet, die jeweils einen entsprechenden Behälter (9a) bilden, welcher nach oben hin offen ist; wobei die Körper durch Längsschlitze (10) voneinander getrennt sind, jeweils oberhalb des Längsdurchlasses (4a) einer dazugehörigen Aufnahmeeinheit (4) angeordnet und ausgebildet, um in Längsrichtung von dem Erntegut durchquert zu werden, das von den Zugelementen (5a, 5b) mitgenommen wird; wobei der Aufnahmekopf Mittel (11) zum zumindest partiellen Verschließen mindestens eines der Längsschlitze (10) umfasst; wobei die Verschlussmittel (11) sich entlang mindestens einer Längskante des mindestens einen Längsschlitzes (10) erstrecken und elastisch biegsam sind, um ihre elastische Verformung beim Durchlauf des Ernteguts entlang der Erstreckung des mindestens einen Längsschlitzes (10) zu ermöglichen; **dadurch gekennzeichnet, dass** die Verschlussmittel (11) mindestens eine Bürste (12) umfassen, die sich entlang mindestens einem Abschnitt der mindestens einen Längskante erstreckt, wobei sich die Borsten der mindestens einen Bürste (12) von der mindestens einen Längskante zur Achse des mindestens einen Längsschlitzes (10) erstrecken.

2. Der Aufnahmekopf gemäß Anspruch 1, **dadurch gekennzeichnet, dass** die Verschlussmittel (11) sich entlang jeder der Längskanten des mindestens einen Längsschlitzes (10) erstrecken.

3. Der Aufnahmekopf gemäß einem oder mehreren der obigen Ansprüche, **dadurch gekennzeichnet, dass** die Verschlussmittel (11) mindestens ein Paar von Bürsten (12) umfassen, jeweils angeordnet entlang einer entsprechenden Längskante des mindestens einen Längsschlitzes (10); wobei sich die Borsten jeder der Bürsten von der entsprechenden Längskante des mindestens einen Schlitzes zur Achse des mindestens einen Längsschlitzes (10) erstrecken.

4. Der Aufnahmekopf gemäß einem oder mehreren der obigen Ansprüche, **dadurch gekennzeichnet, dass** die jeweiligen Borsten der Bürsten (12) in transversalem Querschnitt schräg nach unten ausgerichtet sind, ausgehend von der Achse des mindestens einen Längsschlitzes (10) zur entsprechenden Längskante des mindestens einen Längsschlitzes (10) mit Bezug auf die Anordnungsebene des mindestens einen Längsschlitzes (10).

## Revendications

1. Une tête de ramassage pour machines de ramassage de cultures dans un champ, comprenant une structure (2) adaptée pour être connectée à la partie avant d'une machine (3) pour ramassage de cultures, qui peut se déplacer sur le sol le long d'une direction d'avancement (100), et s'étend substantiellement transversalement à ladite direction d'avancement (100), ladite structure (2) supportant plusieurs unités de ramassage (4) disposées mutuellement côte à côte et dotées chacune d'un passage longitudinal respectif (4a) destiné à être traversé axialement par les cultures à ramasser et délimité longitudinalement par une paire d'éléments de traction (5a, 5b), qui sont mutuellement opposés et sont adaptés pour pousser les cultures le long dudit passage longitudinal (4a), au-dessus desdites unités de ramassage (4) se trouvant plusieurs corps de conteneurs de ramassage (9), dont chacun forme un réceptacle respectif (9a), qui est ouvert vers le haut, lesdits corps étant séparés les uns des autres par des fentes longitudinales (10), chacune disposée au-dessus du passage longitudinal (4a) d'une unité de ramassage (4) respective, et conçue pour être traversée longitudinalement par les cultures entraînées par lesdits éléments de traction (5a, 5b), où la tête de ramassage comprend des moyens (11) pour la fermeture au moins partielle d'au moins une desdites fentes longitudinales (10), lesdits moyens de fermeture (11) s'étendant le long d'au moins un bord longitudinal desdites au moins une fente longitudinale (10) et étant élastiquement flexibles afin de permettre leur déformation élastique lors du passage des cultures le long de l'extension de ladite au moins une fente longitudinale (10) **caractérisée en ce que** lesdits moyens de fermeture (11) comprennent au moins une brosse (12) qui s'étend le long d'au moins une partie dudit au moins un bord longitudinal, les poils de ladite au moins une brosse (12) s'étendant depuis ledit au moins un bord longitudinal vers l'axe de ladite au moins une fente longitudinale (10).

2. La tête de ramassage selon la revendication 1, **caractérisée en ce que** lesdits moyens de fermeture (11) sont étendus le long de chacun des bords longitudinaux de ladite au moins une fente longitudinale (10).

3. La tête de ramassage selon une ou plusieurs des revendications précédentes, **caractérisée en ce que** lesdits moyens de fermeture (11) comprennent au moins une paire de brosses (12), chacune disposée le long d'un bord longitudinal respectif de ladite au moins une fente longitudinale (10), les poils de chacune desdites brosses s'étendant du bord longitudinal correspondant de ladite au moins une fente vers l'axe de ladite au moins une fente longitudinale (10).

4. La tête de ramassage selon l'une ou plusieurs des revendications précédentes, **caractérisée en ce que** lesdites brosses (12) ont, en coupe transversale, les poils respectifs disposés de manière inclinée vers le bas, en partant de l'axe de ladite au moins une fente longitudinale (10) vers le bord longitudinal correspondant de ladite au moins une fente longitudinale (10), par rapport au plan de disposition de ladite au moins une fente longitudinale (10).
